# EUROPÄISCHE PATENTSCHRIFT

(11) **EP 1 728 131 B1**
(45) Veröffentlichungstag und Bekanntmachung des Hinweises auf die Patenterteilung: **05.09.2007**
(21) Anmeldenummer: 05731016.1
(22) Anmeldetag: 18.03.2005
(51) Int. Cl.: G05B 19/042, G05B 19/05

(54) **ELEKTRISCHES FELDGERÄT**
ELECTRIC FIELD DEVICE
APPAREIL ELECTRIQUE DE TERRAIN

(30) Priorität: 24.03.2004 DE 102004015227
(43) Veröffentlichungstag der Anmeldung: 06.12.2006
(73) Patentinhaber: SIEMENS AKTIENGESELLSCHAFT, 80333 München (DE)
(72) Erfinder: JURISCH, Andreas, 16727 Schwante (DE); WINKLER, Bert, 13357 Berlin (DE)
(86) Internationale Anmeldenummer: PCT/DE2005/000519
(87) Internationale Veröffentlichungsnummer: WO 2005/096660

(56) Entgegenhaltungen:
- DE-A1- 10 111 468
- DE-A1- 19 513 747
- DE-U1- 9 421 765
- US-A- 5 444 644
- US-A- 5 901 323

## Beschreibung

Automatisiert gesteuerte Prozesse, wie beispielsweise industrielle Fertigungsprozesse oder Verteilungsprozesse für Wasser, Gas oder elektrische Energie werden üblicherweise mit sogenannten Automatisierungsanlagen gesteuert. Diese Automatisierungsanlagen weisen in Prozessnähe angeordnete, sogenannte Feldgeräte auf, die zur Prozessautomatisierung unterschiedliche Aufgaben wahrnehmen. So können solche Feldgeräte als Messgeräte, Leit- und Steuergeräte, Schutzgeräte oder Geräte zur Überwachung von Qualitätskenngrößen des gesteuerten Prozesses ausgebildet sein. Mit den Feldgeräten werden üblicherweise Messdaten des zu steuernden Prozesses erfasst und gemäß der Funktionen des Feldgerätes weiter verarbeitet. Üblicherweise sind die Feldgeräte untereinander und/oder mit zentral oder dezentral angeordneten Leitstellen zur Kommunikation verbunden, um Daten austauschen zu können.

Die Erfindung betrifft ein elektrisches Feldgerät mit einer rechnergesteuerten zentralen Steuerbaugruppe und zumindest einer Datenein- und/oder -ausgänge aufweisenden Ein-/Ausgabebaugruppe, wobei die zentrale Steuerbaugruppe und die zumindest eine Ein-/Ausgabebaugruppe über einen Datenbus miteinander verbunden sind.

Ein solches Feldgerät ist beispielsweise aus dem Siemens- Gerätehandbuch "SIPROTEC, Distanzschutz 7SA6, V4.3", Bestellnummer C53000-G1100-C156-3 bekannt. Das Gerätehandbuch beschreibt nämlich insbesondere im Kapitel "Montage und Inbetriebsetzung" (Seite 389 ff.) ein elektrisches Feldgerät in Form eines Schutzgerätes, bei dem eine Prozessorbaugruppe als zentrale Steuerbaugruppe und zumindest eine Ein-/Ausgabebaugruppe über ein Flachbandkabel als Datenbus miteinander verbunden sind.

Noch ein solches Feldgerät ist beispielweise aus dem Dokument US-A-5 901 323 bekannt. US-A-5 901 323 beschreibt eine Anpassung der Gerätesoftware eines Feldgerätes an die Art seiner Datenein- und -ausgänge, beim Austausch der Modulen des Feldgerätes.

Die bekannten Feldgeräte werden vom Hersteller üblicherweise in einem vom Kunden bereits bei der Bestellung des Feldgerätes festgelegten und anhand einer Bestellnummer identifizierbaren Mengengerüst ausgeliefert, d. h. beispielsweise, dass die Anzahl der von dem entsprechenden Feldgerät bereitgestellten Datenein- und -ausgänge gemäß dieser Vorgabe festgelegt ist. An dieses Mengengerüst ist eine in der zentralen Steuerbaugruppe enthaltene interne Gerätesoftware (Firmware) zur Steuerung des jeweiligen Feldgerätes angepasst. Diese Anpassung ist entweder herstellerseitig fest vorgegeben oder sie kann in bestimmten Bereichen mittels einer üblicherweise manuellen Konfigurierung der Gerätesoftware eingestellt werden. Bei der ersten Inbetriebnahme sowie bei möglichen Veränderungen (z.B. bei Erweiterungen eines Feldgerätes um weitere Datenein- und -ausgänge) muss häufig eine aufwendige Neukonfigurierung des Feldgerätes vorgenommen werden. Dazu muss entweder eine neu angepasste Firmware aufgespielt werden oder - falls möglich - die Konfiguration der Gerätesoftware manuell an das neue Mengengerüst angepasst werden.

Der Erfindung liegt die Aufgabe zugrunde, ein elektrisches Feldgerät der oben angegebenen Art derart auszubilden, dass eine vergleichsweise einfache Anpassung der Gerätesoftware an sein Mengengerüst erfolgen kann.

Diese Aufgabe wird erfindungsgemäß durch ein elektrisches Feldgerät der angegebenen Art gelöst, bei dem durch die zumindest eine Ein-/Ausgabebaugruppe Art und Anzahl ihrer Datenein- und/oder -ausgänge angebende Baugruppenparameter zum Abruf durch die zentrale Steuerbaugruppe bereitgestellt sind. Der wesentliche Vorteil des erfindungsgemäßen Feldgerätes besteht darin, dass die zumindest eine Ein-/Ausgabebaugruppe nunmehr die Informationen über die Art und Anzahl ihrer Datenein- und/oder -ausgänge bereits selbst zur Verfügung stellt. Unter der Art der Datenein- und/oder -ausgänge wird hierbei verstanden, ob es sich um einen Dateneingang oder einen Datenausgang handelt. Auf diese Weise können manuelle Einstellungen zur Anpassung des Feldgerätes weitestgehend entfallen und eine Konfigurierung kann automatisch erfolgen.

Eine vorteilhafte Ausführungsform des erfindungsgemäßen Feldgerätes sieht vor, dass die zumindest eine Ein-/Ausgabebaugruppe eine Schnittstelle zur Verbindung mit dem Datenbus aufweist und mittels der Schnittstelle die Baugruppenparameter bereitgestellt sind. So können ohne zusätzlich notwendige Bauteile die Baugruppenparameter allein durch die Schnittstelle bereitgestellt werden.

Die Schnittstelle kann hierzu einen Speicherbaustein aufweisen, in dem die Baugruppenparameter gespeichert sind. Es ist jedoch auch möglich, den Speicherbaustein losgelöst von der Schnittstelle auf der Ein-/Ausgabebaugruppe anzuordnen. Die Baugruppenparameter können aus dem Speicherbaustein ausgelesen und zu der zentralen Steuerbaugruppe übertragen werden, wo sie für eine automatische Konfigurierung des Mengengerüstes des Feldgerätes herangezogen werden.

Alternativ zu einem Speicherbaustein, in dem die Baugruppenparameter gespeichert sind, kann ferner gemäß einer Weiterbildung des erfindungsgemäßen Feldgerätes auch vorgesehen sein, dass die Schnittstelle Anschlüsse zur elektrischen Verbindung mit dem Datenbus aufweist, wobei durch eine auf Seiten der Ein-/Ausgabebaugruppe vorgegebene Belegung der Anschlüsse die Baugruppenparameter bereitgestellt sind. Hierdurch kann in einfacher Weise eine Art mechanischer Codierung vorgesehen sein, mit der die Baugruppenparameter angegeben werden. Beispielsweise kann die Anzahl bestimmter belegter - d.h. beispielsweise mit einer Spannung beaufschlagter - Anschlüsse die Anzahl der vorhandenen Datenein- und -ausgänge angeben. Über die Belegung weiterer vorbehaltener Anschlüsse kann dann eine Aussage darüber getroffen werden, ob es sich jeweils um einen Datenein- oder einen Datenausgang handelt.

Der Datenbus kann beliebig, beispielsweise als paralleler Datenbus, ausgebildet sein. Gemäß einer weiteren Ausführungsform des erfindungsgemäßen Feldgerätes wird es aber als besonders vorteilhaft angesehen, wenn der Datenbus eine serielle Datenverbindung mit einer Übertragungsrate von mindestens 100Mbit/s ist. Mit einer solchen seriellen Datenverbindung können Daten zwischen den einzelnen Ein-/Ausgabebaugruppen und der Steuerbaugruppe in der benötigten Geschwindigkeit übertragen werden. Beispiele für entsprechend schnelle serielle Datenverbindungen sind die gemäß der IEEE 1394 standardisierte sogenannte Firewire-Schnittstelle oder USB 2.0.

Gemäß einer weiteren vorteilhaften Ausführungsform des erfindungsgemäßen Feldgerätes ist vorgesehen, dass der Datenbus zur potentialgetrennten, differentiellen Datenübertragung ausgebildet ist. Durch eine solche Ausbildung des Datenbusses kann eine Beeinflussung einzelner Übertragungskanäle des Datenbusses untereinander weitgehend ausgeschlossen werden. Potentialgetrennt bedeutet hierbei, dass zwischen einzelnen Übertragungskanälen keine elektrischen Verbindungen von Masse oder einer Spannungsversorgung vorhanden sind; unter differentiellen Datenübertragungsverfahren versteht man eine Datenübertragung in der Art, dass ein Nutzsignal mittels zweier Leiter eines Übertragungskanals übertragen wird und der Empfänger aus der Differenz der beiden Signalpegel das Nutzsignal rekonstruiert. Durch die Differenzbildung fallen Störungen und Beeinflussungen, die sich auf beide Leiter des Obertragungskanals gleichermaßen auswirken, heraus.

Vorteilhafterweise kann der Datenbus ferner durch eine Lichtwellenleiterdatenverbindung realisiert sein. Mit Lichtwellenleitern kann eine hohe Übertragungsrate bei weitgehend störungsfreiem Betrieb gewährleistet werden.

Eine weitere vorteilhafte Ausführungsform des erfindungsgemäßen Feldgerätes sieht ferner vor, dass der Datenbus über das elektrische Feldgerät hinaus verlängert ist und über den verlängerten Datenbus zusätzlich zu der mindestens einen Ein-/Ausgabebaugruppe zumindest eine weitere Ein-/Ausgabebaugruppe mit der zentralen Steuerbaugruppe verbunden ist. Auf diese Weise ist das Mengengerüst, das in einem bestehenden Feldgerät realisiert werden kann, nicht mehr an die Gehäusemaße des Feldgerätes gebunden. Reicht der Platz im Feldgerätegehäuse nämlich nicht mehr aus, so können auf einfache Weise außerhalb des eigentlichen Feldgerätes eine oder mehrere weitere Ein-/Ausgabebaugruppen angeordnet und über den Datenbus mit dem Feldgerät verbunden werden.

Zum Schutz solcher externen Ein-/Ausgabegruppen vor äußerer Beeinflussung kann in vorteilhafter Weise vorgesehen sein, dass die zumindest eine weitere Ein-/Ausgabebaugruppe in einem separaten Gehäuse angeordnet ist.

Um elektrische Beeinflussungen der einzelnen Ein-/Ausgabebaugruppen untereinander noch weiter zu minimieren, ist vorgesehen, dass jede Ein-/Ausgabebaugruppe eine eigene Spannungsversorgung aufweist.

Ferner kann das elektrische Feldgerät eine Anzeigevorrichtung zur Darstellung der Baugruppenparameter aufweisen.

Die oben angegebene Aufgabe wird ferner durch ein Verfahren zum Konfigurieren eines elektrischen Feldgerätes gelöst, wobei das Feldgerät eine rechnergesteuerte zentrale Steuerbaugruppe und zumindest eine mit der Steuerbaugruppe verbundene Ein-/Ausgabebaugruppe mit Datenein- und/oder -ausgängen umfasst, und wobei das Verfahren die folgenden Schritte aufweist:

Art und Anzahl der jeweiligen Datenein- und/oder -ausgänge angebende Baugruppenparameter werden durch die jeweilige Ein-/Ausgabebaugruppe bereitgestellt und an die zentrale Steuerbaugruppe übertragen und die Baugruppenparameter werden unter Fertigstellen des Konfigurierens des Feldgerätes in einen die zumindest eine Ein-/Ausgabebaugruppe ansteuernden Hardwaretreiber der zentralen Steuerbaugruppe eingebunden.

Auf diese Weise kann durch das Übertragen von auf jeder Ein-/Ausgabebaugruppe bereits vorhandenen Informationen über Art und Anzahl der jeweiligen vorhandenen Datenein- und -ausgänge an die zentrale Steuerbaugruppe und das Einbinden dieser Informationen in einen die jeweilige Ein-/ Ausgabebaugruppe steuernden Hardwaretreiber eine automatische Konfigurierung in vergleichsweise einfacher Weise durchgeführt werden.

Vorteilhafterweise kann bei dem erfindungsgemäßen Verfahren vorgesehen sein, dass die Baugruppenparameter auf einer Anzeigeeinrichtung dargestellt werden. Auf diese Weise kann das aktuelle Mengengerüst des Feldgerätes mittels einer Anzeigeeinrichtung, beispielsweise einem Display, an dem Feldgerät dargestellt werden, so dass der Betreiber des Feldgerätes das jeweilige aktuelle Mengengerüst einsehen kann.

Gemäß einer weiteren vorteilhaften Ausführungsform des erfindungsgemäßen Verfahrens ist ferner vorgesehen, dass die Baugruppenparameter über einen Datenbus in gleichstromfreier Codierung übertragen werden. Durch die gleichstromfreie Codierung können Beeinflussungen und Störungen zwischen den einzelnen Ein- und Ausgabebaugruppen und der zentralen Rechnerbaugruppe minimiert werden.

Gemäß einer weiteren vorteilhaften Ausführungsform des erfindungsgemäßen Verfahrens ist schließlich vorgesehen, dass die Baugruppenparameter über eine Datenverbindung mit einer Übertragungsrate von mindestens 100Mbit/s übertragen werden. Auf diese Weise können Daten zwischen den Ein-/Ausgabebaugruppen und der Rechnerbaugruppe mit der erforderlichen Geschwindigkeit übertragen werden.

Zur näheren Erläuterung der Erfindung sind in
- Figur 1: schematisch ein Ausführungsbeispiel eines elektrischen Feldgerätes und in
- Figur 2: schematisch ein weiteres Ausführungsbeispiel eines elektrischen Feldgerätes
gezeigt.

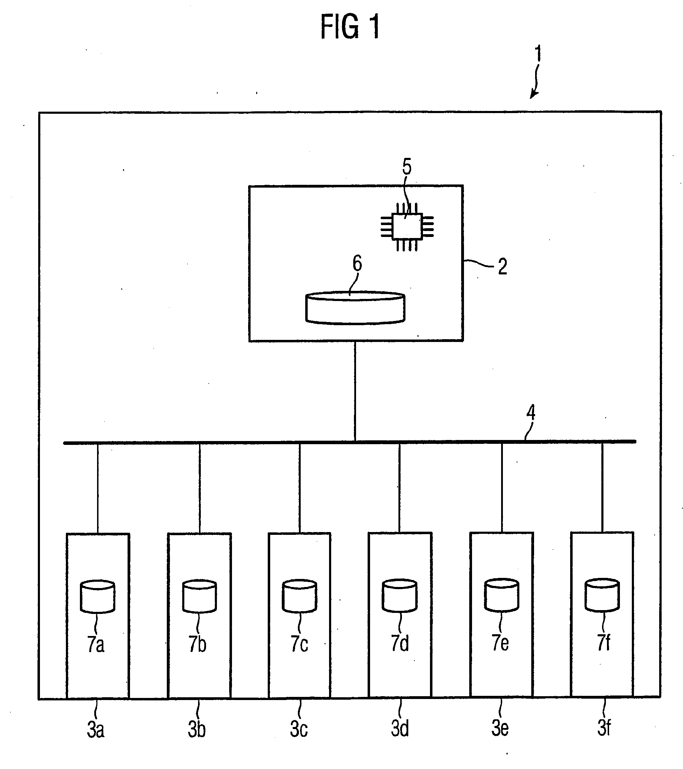

Figur 1 zeigt ein elektrisches Feldgerät 1, das eine rechnergesteuerte zentrale Steuerbaugruppe 2 und mehrere Ein-/Ausgabebaugruppen 3a bis 3f aufweist. Über die Ein-/Ausgabebaugruppen 3a bis 3f ist das Feldgerät 1 mit einem - in der Figur nicht gezeigten - zu steuernden Prozess, beispielsweise einer elektrischen Energieversorgungsleitung, verbunden. Hierzu sind an dem Prozess Wandlereinrichtungen vorgesehen, über die Prozesswerte in für das Feldgerät 1 verarbeitbare Messwerte umgesetzt werden und den Ein-/Ausgabebaugruppen 3a bis 3f des Feldgeräts 1 zugeführt werden.

Die von den Ein-/Ausgabebaugruppen 3a bis 3f aufgenommenen Messwerte werden an die zentrale Steuerbaugruppe 2 übertragen und dort mittels einer Rechnereinrichtung 5 verarbeitet. Hierzu sind die Ein-/Ausgabebaugruppen 3a bis 3f und die zentrale Steuerbaugruppe 2 über einen Datenbus 4 in Form einer seriellen Datenverbindung mit einer Übertragungsrate von mindestens 100 Mbit/s verbunden. Eine solche serielle Datenverbindung kann beispielsweise gemäß dem allgemein als "Firewire" bekannten Standard für serielle Hochgeschwindigkeitsdatenverbindungen ausgeführt sein. Hierdurch wird eine schnelle Datenübertragung zwischen den Ein-/Ausgabebaugruppen 3a bis 3f und der zentralen Steuerbaugruppe 2 gewährleistet. Um Störungen bei der Datenübertragung zu vermeiden, ist der serielle Datenbus 4 entweder mittels Lichtwellenleitern oder einer differentiellen, potentialgetrennten elektrischen Datenverbindung ausgeführt.

Die von den Ein-/Ausgabebaugruppen 3a bis 3f aufgenommenen Messwerte werden über den Datenbus 4 an die zentrale Steuerbaugruppe 2 übertragen und dort mittels der Rechnereinrichtung 5, bei der es sich z.B. um einen Mikroprozessor handeln kann, verarbeitet. Die Rechnereinrichtung 5 arbeitet hierzu eine in der zentralen Steuerbaugruppe 2 vorgegebene Gerätesoftware ab.

Bei der Erstinbetriebnahme des Feldgeräts 1 oder bei Änderungen, wie beispielsweise Erweiterungen des Feldgerätes um eine weitere Ein-/Ausgabebaugruppe, muss diese Gerätesoftware an das jeweilige neue Mengengerüst des Feldgerätes 1 angepasst werden. Hierzu weist die Gerätesoftware einen Hardwaretreiber 6 auf, der die Verwaltung der Ein-/Ausgabebaugruppen 3a bis 3f vornimmt und die Kommunikation zwischen den Ein-/Ausgabebaugruppen 3a bis 3f und der zentralen Steuerbaugruppe 2 steuert.

Zur effizienten Einstellung des Hardwaretreibers 6 - und damit auch der Gerätesoftware der zentralen Steuerbaugruppe 2 - weisen die Ein-/Ausgabebaugruppen 3a bis 3f jeweils einen Speicherbaustein 7a bis 7f auf, in dem Baugruppenparameter abgelegt sind, die die Art und Anzahl der von der jeweiligen Ein-/Ausgabebaugruppe bereitgestellten Datenein- bzw. - ausgänge angeben. Beispielsweise sei angenommen, dass die Ein-/Ausgabebaugruppe 3a fünf Datenein- und acht Datenausgänge aufweist. Analog können die übrigen Ein-/Ausgabebaugruppen 3b bis 3f jeweils eigene Kombinationen von Datenein- bzw. -ausgängen aufweisen. Bei der ersten Datenverbindung zwischen den jeweiligen Ein-/Ausgabebaugruppen und der zentralen Steuerbaugruppe 2 werden die jeweiligen Baugruppenparameter von der entsprechenden Ein-/Ausgabebaugruppe 3a bis 3f an die zentrale Steuerbaugruppe 2 übertragen. Dort werden die Baugruppenparameter in den Hardwaretreiber 6 eingebunden, der der zentralen Steuerbaugruppe 2 anschließend eine Verwaltung der einzelnen Datenein- bzw. -ausgänge der jeweiligen Ein-/Ausgabebaugruppen 3a bis 3f ermöglicht.

Die Speicherbausteine 7a bis 7f können - wie in Figur 1 gezeigt - als separate Bausteine ausgeführt sein. Es ist aber auch möglich, einen jeweiligen Speicherbaustein in eine Schnittstelle der Ein-/Ausgabebaugruppe zur elektrischen Verbindung mit dem Datenbus zu integrieren.

Außerdem kann anstelle eines Speicherbausteins auch eine rein mechanische Codierung der Baugruppenparameter in Form einer entsprechend ausgeführten Anschlussbelegung der Schnittstelle vorgesehen sein.

Damit sich die einzelnen Ein-/Ausgabebaugruppen 3a bis 3f und die zentrale Steuerbaugruppe 2 nicht gegenseitig beeinflussen wird die Datenübertragung mit einem gleichstromfreien Übertragungscode vorgenommen. Auf diese Weise werden nicht von den einzelnen Ein-/Ausgabebaugruppen 3a bis 3f Gleichströme in Form gleichbleibender High- bzw. Low-Zustände auf den Leitungen des Datenbusses 4 erzeugt, die aufgrund ihrer Gleichstromwirkung zu einer Beeinflussung der einzelnen Ein-/Ausgabebaugruppen 3a bis 3f untereinander oder der zentralen Rechnerbaugruppe 2 und zu einer Verfälschung von übertragenen Daten führen können. Ein Beispiel für einen gleichstromfreien Übertragungscode ist der z.B. in der Netzwerktechnik angewandte Manchestercode.

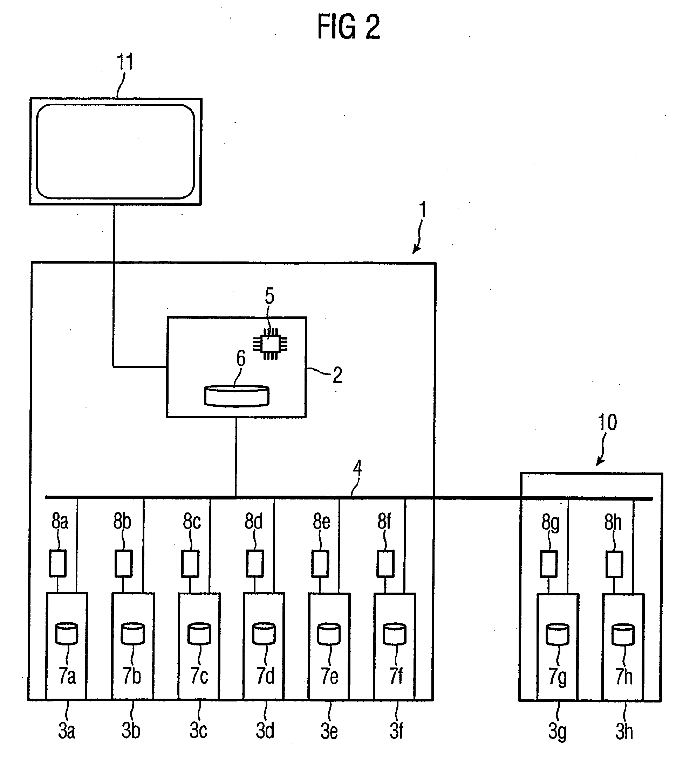

In Figur 2 ist ein weiteres Ausführungsbeispiel eines elektrischen Feldgerätes 1 gezeigt, wobei zur Figur 1 analoge Komponenten der Übersichtlichkeit halber mit denselben Bezugszeichen gekennzeichnet sind. Gemäß Figur 2 ist zur Erweiterung des bestehenden elektrischen Feldgerätes 1 ein externes Gehäuse 10 mit weiteren Ein-/Ausgabebaugruppen 3g und 3h, die in dem ursprünglichen Gehäuse des Feldgerätes 1 keinen Platz mehr finden würden, an das elektrische Feldgerät 1 angeschlossen. Hierzu ist der serielle Datenbus 4 über das Gehäuse des elektrischen Feldgerätes 1 hinaus verlängert und in das separate Gehäuse 10 hineingezogen. Mit dieser Verlängerung des seriellen Datenbusses 4 sind nunmehr die weiteren Ein-/Ausgabebaugruppen 3g und 3h verbunden. Auch diese weiteren Ein-/Ausgabebaugruppen 3g und 3h weisen analog zu den anderen Ein-/Ausgabebaugruppen 3a bis 3f Speicherbausteine 7g und 7h auf, in denen Baugruppenparameter gespeichert sind, die Art und Anzahl der auf jeder Ein-/Ausgabebaugruppe vorhandenen Datenein- bzw. -ausgänge angeben. Ein Anpassung des Hardwaretreibers 6 der zentralen Steuerbaugruppe 2 des elektrischen Feldgerätes 1 auf die neu hinzugekommenen Ein-/Ausgabebaugruppen 3g und 3h erfolgt in analoger Weise wie zu Figur 1 beschrieben durch Übertragung und Einbindung der Baugruppenparameter von den neu hinzugekommenen Ein-/Ausgabebaugruppen 3g und 3h. Da der serielle Datenbus 4 eine hohe Datenübertragungsgeschwindigkeit von mindestens 100 Mbit/s bereitstellt, kann eine Verlängerung des Datenbusses 4 über das ursprüngliche Gehäuse des Feldgerätes 1 hinaus ohne Nachteile hinsichtlich der Übertragungsgeschwindigkeit vorgenommen werden.

Zur Vermeidung von Störungen der einzelnen Ein-/Ausgabebaugruppen 3a bis 3h untereinander, die durch eine gemeinsame Spannungsversorgung herrühren können, ist jede einzelne Ein-/Ausgabebaugruppe mit einer eigenen Spannungsversorgung 8a bis 8h ausgestattet. Auf diese Weise bleiben Störungen, die bezüglich einer Ein-/Ausgabebaugruppe aufgrund ihrer Spannungsversorgungen eingetragen werden, auf diese eine Ein-/Ausgabebaugruppe beschränkt und schlagen nicht auf alle Ein-/Ausgabebaugruppen durch.

Das Feldgerät 1 weist ferner, wie in Figur 2 höchst schematisch dargestellt, eine Anzeigevorrichtung 11 auf, die entweder direkter Bestandteil des Feldgerätes 1 sein kann oder eine separate Anzeigevorrichtung darstellt. Mittels dieser Anzeigevorrichtung 11 kann das von dem Feldgerät 1 automatisch konfigurierte Mengengerüst des Feldgerätes 1, also alle Ein-/Ausgabebaugruppen 3a bis 3h mit ihren zugehörigen Datenein- bzw. -ausgängen angezeigt werden. Hierdurch kann ein Betreiber des elektrischen Feldgerätes 1 das Mengengerüst einsehen und kontrollieren.

## Patentansprüche

1. Elektrisches Feldgerät (1) mit
- einer rechnergesteuerten zentralen Steuerbaugruppe (2) und
- zumindest einer Datenein- und/oder -ausgänge aufweisenden Ein-/Ausgabebaugruppe (3a-3f), wobei
- die zentrale Steuerbaugruppe (2) und die zumindest eine Ein-/Ausgabebaugruppe (3a-3f) über einen Datenbus (4) miteinander verbunden sind,
**dadurch gekennzeichnet, dass**
- durch die zumindest eine Ein-/Ausgabebaugruppe (3a-3f) Art und Anzahl ihrer Datenein- und/oder -ausgänge angebende Baugruppenparameter zum Abruf durch die zentrale Steuerbaugruppe (2) bereitgestellt sind.

2. Elektrisches Feldgerät (1) nach Anspruch 1,
**dadurch gekennzeichnet, dass**
- die zumindest eine Ein-/Ausgabebaugruppe (3a-3f) eine Schnittstelle zur Verbindung mit dem Datenbus (4) aufweist und
- mittels der Schnittstelle die Baugruppenparameter bereitgestellt sind.

3. Elektrisches Feldgerät (1) nach Anspruch 1 oder 2,
**dadurch gekennzeichnet, dass**
die zumindest eine Ein-/Ausgabebaugruppe (3a-3f) einen die Baugruppenparameter enthaltenden Speicherbaustein (7a-7f) aufweist.

4. Elektrisches Feldgerät (1) nach Anspruch 2,
**dadurch gekennzeichnet, dass**
- die Schnittstelle Anschlüsse zur elektrischen Verbindung mit dem Datenbus (4) aufweist wobei durch eine auf Seiten der Ein-/Ausgabebaugruppe (3a-3f) vorgegebene Belegung der Anschlüsse die Baugruppenparameter bereitgestellt sind.

5. Elektrisches Feldgerät (1) nach einem der vorangehenden Ansprüche,
**dadurch gekennzeichnet, dass**
der Datenbus (4) eine serielle Datenverbindung mit einer Übertragungsrate von mindestens 100Mbit/s ist.

6. Elektrisches Feldgerät (1) nach einem der vorangehenden Ansprüche,
**dadurch gekennzeichnet, dass**
der Datenbus (4) zur potentialgetrennten, differentiellen Datenübertragung ausgebildet ist.

7. Elektrisches Feldgerät (1) nach einem der Ansprüche 1 bis 5,
**dadurch gekennzeichnet, dass**
- der Datenbus (4) eine Lichtwellenleiter-Datenverbindung ist.

8. Elektrisches Feldgerät (1) nach einem der vorangehenden Ansprüche,
**dadurch gekennzeichnet, dass**
der Datenbus (4) über das elektrische Feldgerät (1) hinaus verlängert ist und
- über den verlängerten Datenbus (4) zusätzlich zu der mindestens einen Ein-/Ausgabebaugruppe (3a-3f) zumindest eine weitere Ein-/Ausgabebaugruppe (3g,3h) mit der zentralen Steuerbaugruppe (2) verbunden ist.

9. Elektrisches Feldgerät (1) nach Anspruch 8,
**dadurch gekennzeichnet, dass**
die zumindest eine weitere Ein-/Ausgabebaugruppe (3g,3h) in einem separaten Gehäuse (10) angeordnet ist.

10. Elektrisches Feldgerät (1) nach einem der vorangehenden Ansprüche,
**dadurch gekennzeichnet, dass**
jede Ein-/Ausgabebaugruppe (3a-3h)eine eigene Spannungsversorgung (8a-8h) aufweist.

11. Elektrisches Feldgerät (1) nach einem der vorangehenden Ansprüche,
**dadurch gekennzeichnet, dass**
- das elektrische Feldgerät (1) eine Anzeigevorrichtung (11) zur Darstellung der Baugruppenparameter aufweist.

12. Verfahren zum Konfigurieren eines elektrischen Feldgerätes (1), wobei das elektrische Feldgerät (1) eine zentrale rechnergesteuerte Steuerbaugruppe (2) und zumindest eine mit der Steuerbaugruppe (2) verbundene Ein-/Ausgabebaugruppe (3a-3f) mit Datenein- und/oder -ausgängen umfasst, wobei das Verfahren die folgenden Schritte aufweist:
- Bereitstellen von Art und Anzahl der jeweiligen Datenein- und -ausgänge angebenden Baugruppenparametern durch die jeweilige Ein-/Ausgabebaugruppe (3a-3f);
- Übertragen der Baugruppenparameter an die zentrale Steuerbaugruppe (2);
- Einbinden der Baugruppenparameter in einen die zumindest eine Ein-/Ausgabebaugruppe (3a-3f) ansteuernden Hardwaretreiber (6) der zentralen Steuerbaugruppe (2) unter Fertigstellen des Konfigurierens des elektrischen Feldgerätes (1) .

13. Verfahren nach Anspruch 12,
**dadurch gekennzeichnet, dass**
die Baugruppenparameter auf einer Anzeigeeinrichtung (11) dargestellt werden.

14. Verfahren nach Anspruch 12 oder 13,
**dadurch gekennzeichnet, dass**
die Baugruppenparameter über eine Datenverbindung in gleichstromfreier Codierung übertragen werden.

15. Verfahren nach einem der Ansprüche 12 bis 14,
**dadurch gekennzeichnet, dass**
die Baugruppenparameter über eine Datenverbindung mit einer Übertragungsrate von mindestens 100Mbit/s übertragen werden.

## Claims

1. Electric field device (1) having
- a computer-controlled central control module (2), and
- at least one input/output module (3a-3f) having data inputs and/or outputs,
- the central control module (2) and the at least one input/output module (3a-3f) being connected to one another via a databus (4),
**characterized in that**
- the at least one input/output module (3a-3f) makes available module parameters, which specify the type and number of its data inputs and/or outputs, for them to be called up by the central control module (2).

2. Electric field device (1) according to Claim 1,
**characterized in that**
- the at least one input/output module (3a-3f) has an interface for connection to the databus (4), and
- the module parameters are made available by means of the interface.

3. Electric field device (1) according to Claim 1 or 2,
**characterized in that**
the at least one input/output module (3a-3f) has a memory chip (7a-7f) containing the module parameters.

4. Electric field device (1) according to Claim 2,
**characterized in that**
- the interface has connections for connecting them electrically to the databus (4), the module parameters being made available by the connections being occupied in a prescribed manner on the side of the input/output module (3a-3f).

5. Electric field device (1) according to one of the preceding claims,
**characterized in that**
the databus (4) is a serial data link having a transmission rate of at least 100 Mbit/s.

6. Electric field device (1) according to one of the preceding claims,
**characterized in that**
the databus (4) is designed for electrically isolated, differential data transmission.

7. Electric field device (1) according to one of Claims 1 to 5,
**characterized in that**
- the databus (4) is an optical waveguide data link.

8. Electric field device (1) according to one of the preceding claims,
**characterized in that**
the databus (4) is extended beyond the electric field device (1), and
- in addition to the at least one input/output module (3a-3f), at least one further input/output module (3g, 3h) is connected to the central control module (2) via the extended databus (4).

9. Electric field device (1) according to Claim 8,
**characterized in that** the at least one further input/output module (3g, 3h) is arranged in a separate housing (10).

10. Electric field device (1) according to one of the preceding claims,
**characterized in that**
each input/output module (3a-3h) has a dedicated voltage supply (8a-8h) .

11. Electric field device (1) according to one of the preceding claims,
**characterized in that**
- the electric field device (1) has an indicator apparatus (11) for the purpose of representing the module parameters.

12. Method for configuring an electric field device (1), the electric field device (1) comprising a central computer-controlled control module (2) and at least one input/output module (3a-3f), which is connected to the control module (2) and has data inputs and/or outputs, the method having the following steps:
- the respective input/output module (3a-3f) making available module parameters, which specify the type and number of the respective data inputs and outputs;
- transmission of the module parameters to the central control module (2);
- incorporation of the module parameters in a hardware drive (6), which drives the at least one input/output module (3a-3f), of the central control module (2) whilst completing the configuration of the electric field device (1).

13. Method according to Claim 12,
**characterized in that**
the module parameters are represented on an indicator device (11).

14. Method according to Claim 12 or 13,
**characterized in that**
the module parameters are transmitted via a data link using encoding with no DC level.

15. Method according to one of Claims 12 to 14,
**characterized in that**
the module parameters are transmitted via a data link at a transmission rate of at least 100 Mbit/s.

## Revendications

1. Appareil électrique de terrain (1), comprenant
- un module de commande central (2) commandé par ordinateur et
- au moins un module d'entrée / sortie (3a à 3f) comportant des entrées et/ou sorties de données,
- le module de commande central (2) et le ou les modules d'entrée / sortie (3a à 3f) étant reliés entre eux par l'intermédiaire d'un bus de données (4),
**caractérisé par le fait que**
- le ou les modules d'entrée / sortie (3a à 3f) mettent à disposition des paramètres de module indiquant le type et le nombre de leurs entrées et/ou sorties de données en vue d'une interrogation par le module de commande central (2).

2. Appareil électrique de terrain (1) selon la revendication 1,
**caractérisé par le fait que**
- le ou les modules d'entrée / sortie (3a à 3f) comportent chacun une interface pour la liaison avec le bus de données (4) et
- les paramètres de module sont mis à disposition au moyen de l'interface.

3. Appareil électrique de terrain (1) selon la revendication 1 ou 2,
**caractérisé par le fait que** le ou les modules d'entrée / sortie (3a à 3f) comportent chacun un composant de mémoire (7a à 7f) contenant les paramètres de module.

4. Appareil électrique de terrain (1) selon la revendication 2,
**caractérisé par le fait que**
- l'interface comporte des bornes pour la liaison électrique avec le bus de données (4), les paramètres de module étant mis à disposition par une certaine occupation des bornes prescrite par le module d'entrée / sortie (3a à 3f).

5. Appareil électrique de terrain (1) selon l'une des revendications précédentes,
**caractérisé par le fait que** le bus de données (4) est une liaison de données sérielle avec un débit de transmission d'au moins 100 MBit/s.

6. Appareil électrique de terrain (1) selon l'une des revendications précédentes,
**caractérisé par le fait que** le bus de données (4) est conçu pour la transmission de données différentielle avec séparation des potentiels.

7. Appareil électrique de terrain (1) selon l'une des revendications 1 à 5,
**caractérisé par le fait que**
- le bus de données (4) est une liaison de données par fibres optiques.

8. Appareil électrique de terrain (1) selon l'une des revendications précédentes,
**caractérisé par le fait que**
- le bus de données (4) est prolongé au-delà de l'appareil électrique de terrain (1) et
- en plus du ou des modules d'entrée / sortie (3a à 3f), au moins un autre module d'entrée / sortie (3g, 3h) est relié au module de commande central (2) par l'intermédiaire du bus de données prolongé (4).

9. Appareil électrique de terrain (1) selon la revendication 8,
**caractérisé par le fait que** le ou les autres modules d'entrée / sortie (3g, 3h) sont placés dans un boîtier séparé (10).

10. Appareil électrique de terrain (1) selon l'une des revendications précédentes,
**caractérisé par le fait que** chaque module d'entrée / sortie (3a à 3h) comporte une alimentation en tension particulière (8a à 8h).

11. Appareil électrique de terrain (1) selon l'une des revendications précédentes,
**caractérisé par le fait que**
- l'appareil électrique de terrain (1) comporte un dispositif d'affichage (11) pour la présentation des paramètres de module.

12. Procédé de configuration d'un appareil électrique de terrain (1), l'appareil électrique de terrain (1) comprenant un module de commande central (2) commandé par ordinateur et au moins un module d'entrée / sortie (3a à 3f) comportant des entrées et/ou sorties de données et relié au module de commande (2), le procédé comprenant les étapes suivantes :
- mise à disposition de paramètres de module indiquant le type et le nombre des entrées et sorties de données respectives par le module d'entrée / sortie respectif (3a à 3f) ;
- transmission des paramètres de module au module de commande central (2) ;
- intégration des paramètres de module dans un pilote matériel (6), commandant le ou les modules d'entrée / sortie (3a à 3f), du module de commande central (2) avec mise en oeuvre de la configuration de l'appareil électrique de terrain (1).

13. Procédé selon la revendication 12,
**caractérisé par le fait que** les paramètres de module sont présentés sur un dispositif d'affichage (11).

14. Procédé selon la revendication 12 ou 13,
**caractérisé par le fait que** les paramètres de module sont transmis par l'intermédiaire d'une liaison de données avec un codage sans courant continu.

15. Procédé selon l'une des revendications 12 à 14,
**caractérisé par le fait que** les paramètres de module sont transmis par l'intermédiaire d'une liaison de données avec un débit de transmission d'au moins 100 MBit/s.
